# EUROPEAN PATENT APPLICATION

(11) **EP 1 415 530 A1**
(43) Date of publication of application: **06.05.2004**
(21) Application number: 02425662.0
(22) Date of filing: 30.10.2002
(51) Int. Cl.: A01D 46/26

(54) **An improved tree shaker for fruit collecting.**

(71) Applicant: Active S.R.L., 26037 S.Giovanni in Croce (CR) (IT)
(72) Inventor: Griffini, Alberto, I-26034 Pontirolo (IT)
(74) Representative: Robba, Pierpaolo

(57) **Abstract**

A tree shaking device for collecting fruits from trees, comprising a housing (2) containing an eccentric kinematic mechanism (3) and a reciprocating rod (9) partially housed within said housing (2) and equipped at its free end with a hook (11) . To the housing (21) of a light alloy there is fastened a steel bush (14), preferably embedded in the light alloy casting of the housing (2), that supports the kinematics mechanism (3) comprising an eccentric member (3) and two bearings (15, 16).

## Description

The present invention relates to a tree shaking device for collecting fruits.

In particular, the invention is advantageously employed for harvesting fruits from trees such as olives, walnuts, hazelnuts and so on. Prior art devices of this type are for instance known from EP 1 095 554 in the name of the present applicant.

The devices of this type comprise a rod equipped at its end with a hook for engaging a branch of a tree, this rod being partially contained within a housing and receiving a reciprocating motion through an eccentric kinematics mechanism, which in turn transforms a rotating motion of a motor into a reciprocating motion.

An eccentric arm, through a connecting rod, imparts a reciprocating motion to the rod carrying the hook with a stroke of about 60 mm. When the hook engages the single branches of a tree the rod transmits the reciprocating motion to the branches shaking them and causing the fruits to fall from the tree.

A drawback of these known shaking devices derives from the heavy oscillatory stresses transmitted to the reduction gearbox and the motor.

In fact, in use the hook is connected to the branch and the machine is driven in a reciprocating motion according to the direction of the rod with a displacement that can reach the maximum stroke generated by the eccentric.

The known devices generally provide for a housing formed by two half shells that contains a reduction gearbox, more particularly a mechanism comprising a bevel gear and an eccentric member which transforms the rotary motion into a reciprocating motion through a connecting rod. The rotating shaft of such eccentric member is preferably secured through two bearings to one of said half shells that are made of a light alloy, typically aluminium or magnesium alloy.

With such an arrangement however all the reaction vibrations and stresses coming from the hook, that are quite large,when the system enters into resonance and/or phase opposition, act onto the two bearings supporting the eccentric member, and therefore onto the half shell aluminium seat in contact with the bearing outer ring. These strong pulsating stresses acting onto the half shell aluminium surface, deform this latter in a permanent manner and consequently the bearings are no longer properly retained within their seat and the whole assembly comprising the eccentric member and the crown wheel oscillates. This circumstance causes a quick (early) wear of the teeth in the bevel gear pair and of the bearings.

A further problem of the known devices consists in that the seat of the bearings is made of a light alloy that exhibits a larger coefficient of thermal expansion than that of the bearings, so that when the machines is operated and warms up, the proper locating of the bearings within their seat can be ruined.

It is an object of the present invention to provide an improved tree shaking device that overcomes the above mentioned undesired affects.

According to the invention, these objects are achieved through a tree shaking device as claimed in claim 1. Further advantageous characteristics are recited in the dependent claims.

In the shaking device according to the invention, a bush of a stronger material, e.g. of steel, is secured during the pressure die-casting step, to the housing in' which the eccentric mechanism is located.

Thus the bush remains embedded into the light alloy (aluminium or magnesium alloy) casting of the housing containing the gear reduction device, and then the housing members are subjected to conventional machining operations such as smoothing, drilling, boring of the bearings seats, threading and so on.

The present invention will now be disclosed with reference to the accompanying drawings illustrating preferred but not limiting embodiments of the invention, in which:
Figure 1 is a cross section view of a shaking device according to the invention;
Figure 2 is an exploded perspective view illustrating one half shell and some inner components of the reduction gearbox;
Figure 3 is a perspective view showing a steel bush according to the invention;
Figures 4A, 4B and 4C are cross section views of the half shell for illustrating the invention, in which Figure 4A is a top view, and Figures 4B and 4C are cross section views along lines A-A and B-B, respectively.

Throughout all the Figures the same reference numerals are used to indicate similar or substantially corresponding parts.

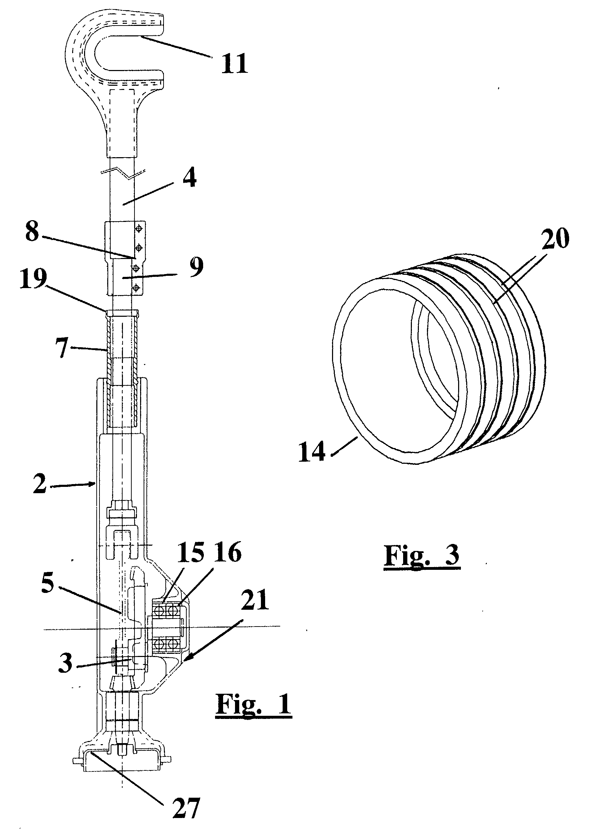

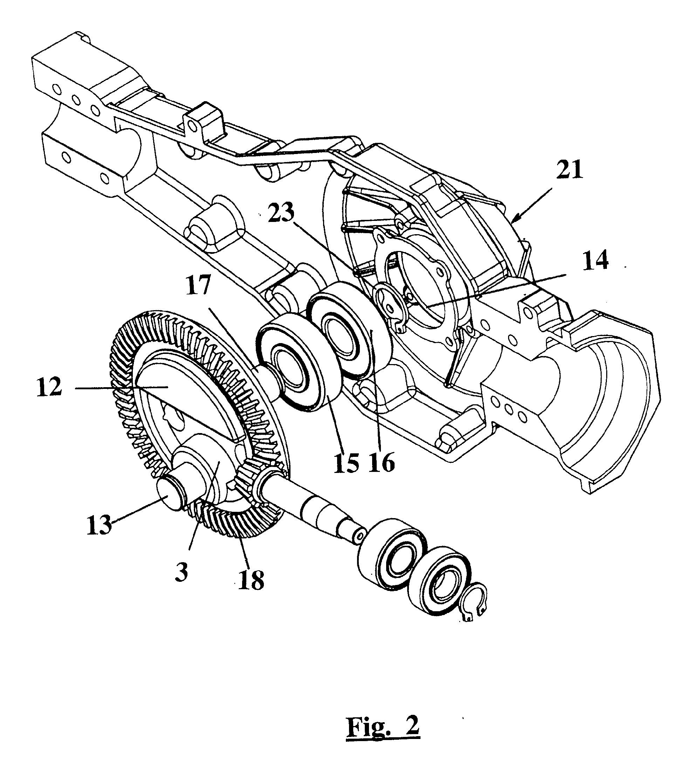

Firstly with reference to Figures 1 and 2, a shaking device 1 according to the invention comprises a body or housing 2 made up by two half shells or half-cases, one of which is shown in Fig. 2 and indicated by the numeral reference 21, and containing an eccentric kinematic mechanism 3, and a driving rod 9 partially located within said housing and movable with a reciprocating motion imparted by said eccentric kinematic mechanism, said driving rod being connected to the mechanism through a connecting rod 5.

The rod 9 is partially housed in the housing 2 and, through a connecting sleeve or coupling 8, is connected to an end rod 4 carrying a hook 11 to engage the branches of a tree for collecting fruits therefrom.

The rod 9 is preferably of rectified steel, while the terminal rod 4 is preferably of a light alloy. The rod 9 slides within two bronze bushings 7, placed at a certain distance from each other to increase the guiding action of the rod 9, and a sealing ring 19 is fitted at the end of the farther bronze bushing to prevent leakages of the lubricating oil contained in the box 2. Alternatively, a single bronze bushing of appropriate length can be provided for. The hook 11, illustrated with greater details in Figure 7 is equipped with a rubber protection 12 to avoid damaging the branches.

More particularly, the rod 9, driven by bronze bushings 7 reciprocates thanks to the eccentric kinematic mechanism 3 which comprises a connecting rod 5 fastened to the inner end of rod 9 and a bevel gear pair 18 receiving the rotary motion of a motor 28 through a clutch 27, and transforming it into a reciprocating motion. More particularly the bevel gear pair 18 is equipped with a counterweight 12 to compensate the different weights of the parts.

As illustrated with more details in Figures 2-4, the half shell 21 is shaped and arranged for supporting the kinematic mechanism formed by the eccentric member 3, the crown wheel 18 and the bearings 15 and 16. In the half shell 21 there is fitted a seat 14 of steel or more generally of a material stronger than the alloy of which the housing 2 is made.

The bearings 15 are mounted on a pin 17, secured by a seeger ring 23, and then forced into the steel seat 14. This seat is realised as a steel cylindrical bush that is preferably embedded into the half shell during the casting of the housing 2.

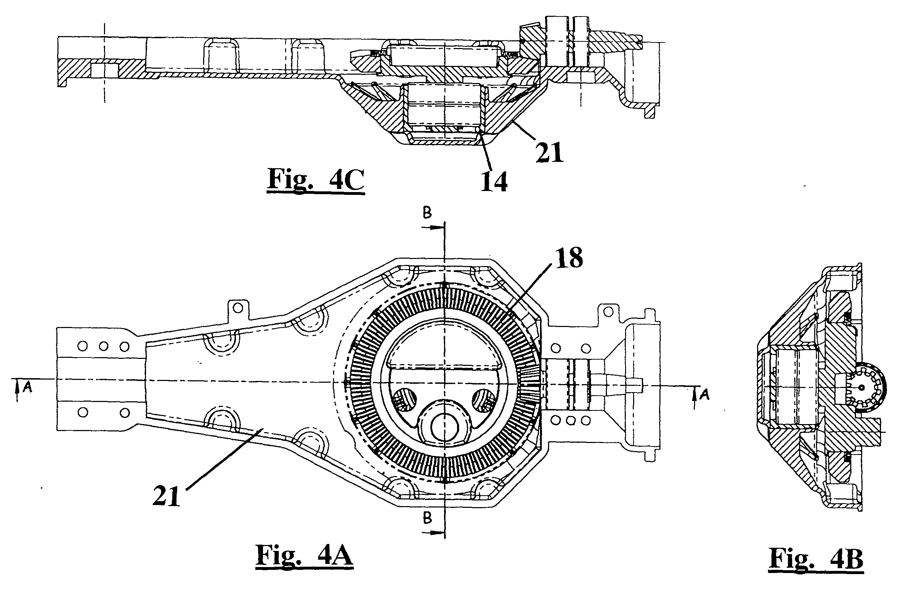

Advantageously the outer surface of the bush 14 is provided with a few circular grooves 20, as shown in Fig. 3, allowing for a stronger grip of the light alloy casting.

Alternatively, the bush and the half shell can be provided with threads whereby the bush can be screwed to the half shell 21. Of course different securing means can be used.

The connecting rod 5 is joined to the eccentric pin 13 through a roller cage or a bronze bushing. The bearings 15 and 16 can be either ball bearings or roll bearings. In a presently preferred embodiment bearing 16 is a roll bearing and bearing 15 is a ball bearing.

Since the bush 14 is of steel, its modulus is larger than that of the shell alloy and thus the stress onto the seat'caused by the bearings is smaller, and further the seat is no longer strained thus preventing the play or loose fitting between the seat and the half shell, and therefore a possible damage to the teeth of the bevel gear pair.

Additionally an advantage is achieved in that the bush in the seat and the bearings are of a same material and therefore they exhibit the same coefficient of expansion. As a consequence the fitting between the bearings and the seat remains firm even when the lubricating oil and therefore the half shells are heated.

Although the invention has been illustrated with reference to preferred embodiments thereof, it is generally subjected to other applications and modifications which fall within the scope of the invention as will be evident to the skilled of the art.

## Claims

1. A tree shaking device for collecting fruits from trees, comprising: a housing (2) containing an eccentric kinematic mechanism (3) comprising a crown wheel (18) which transforms the rotary motion of a motor into a reciprocating motion and reciprocates a rod (4) equipped at its free end with a hook (11), **characterised in that** said housing (2) comprises at least a part (14) made of a material that is stronger than the remaining of said housing, on which said kinematic mechanism (3) is supported.

2. A tree shaking device as claimed in claim 1, **characterised in that** said housing (2) is made of an aluminium or magnesium alloy, and said stronger material part (14) is made of steel.

3. A tree shaking device as claimed in claim 1, **characterised in that** said stronger material part (14) is embedded into said housing (2) during the casting thereof.

4. A tree shaking device as claimed in claim 1, **characterised in that** said stronger material part (14) is screwed into a threaded opening formed in said housing (2).

5. A tree shaking device as claimed in the preceding claims, **characterised in that** said housing (2) comprises two half shells in one (21) of which is embedded said stronger material part (14) formed as a cylindrical bush (14) provided with grooves (20) on its outer surface.

6. A tree shaking device as claimed in the preceding claims, **characterised in that** in said bush (14) there is fitted at least one bearing (15, 16) supporting said crown wheel (18).

7. A tree shaking device as claimed in claim 6, **characterised in that** one of said bearings (15) is a ball bearing and the other of said bearings (16) is a roll bearing.

8. A tree shaking device as claimed in the preceding claims, **characterised in that** said bearings (15, 16) are mounted on a pin (17), secured by a seeger ring (23), and then forced into the steel seat (14).

9. A tree shaking device as claimed in the preceding claims, **characterised in that** said kinematics mechanism (3) comprises a bevel gear pair (18) equipped with a counterweight (12) to compensate the different weight of the parts.
